# FASCICULE DE BREVET EUROPEEN

(11) **EP 0 912 246 B1**
(45) Date de publication et mention de la délivrance du brevet: **02.07.2003**
(21) Numéro de dépôt: 98924381.1
(22) Date de dépôt: 05.05.1998
(51) Int. Cl.: B01L 3/02, G01N 1/00

(54) **DISPOSITIF DE TRANSFERT D'UN LIQUIDE**
VORRICHTUNG ZUR ÜBERTRAGUNG EINER FLÜSSIGKEIT
LIQUID TRANSFERRING DEVICE

(30) Priorité: 05.05.1997 FR 9705785
(43) Date de publication de la demande: 06.05.1999
(73) Titulaire: BIOMERIEUX, 69280 Marcy-L'Etoile (FR)
(72) Inventeur: COLIN, Bruno, F-69280 Marcy L'Etoile (FR); Paris, Cécile, F-69003 Lyon (FR)
(74) Mandataire: Guerre, Dominique
(86) Numéro de dépôt international: FR9800903
(87) Numéro de publication internationale: WO98050155

(56) Documents cités:
- EP-A- 0 381 501
- EP-A- 0 701 865
- WO-A-83/01912
- WO-A-93/02795
- WO-A-93/09431
- US-A- 4 585 623
- PATENT ABSTRACTS OF JAPAN vol. 095, no. 006, 31 juillet 1995 & JP 07 080331 A (FUJI PHOTO FILM CO LTD), 28 mars 1995

## Description

De manière générale, la présente invention concerne un dispositif de transfert d'un échantillon liquide, prélevé par aspiration, au travers d'une paroi comprenant un orifice la traversant de part en part.

Différents dispositifs permettant, dans un premier temps d'aspirer un échantillon liquide, et dans un deuxième temps d'expulser tout ou partie de cet échantillon, sont déjà connus, et comprennent de manière générale et à titre principal, un conduit, un piston coulissant de manière étanche dans ledit conduit, et une tige de commande, notamment manuelle, ou moyen équivalent, dudit piston.

La présente invention a pour objet un dispositif de transfert ayant l'agencement précédemment défini, mais permettant à lui seul après transfert, d'obturer de manière étanche, ou sceller l'orifice à travers lequel le liquide prélevé par aspiration a été ensuite expulsé.

En partant d'une paroi telle que précédemment définie, c'est-à-dire comprenant l'orifice calibré la traversant de part en part, et au travers de laquelle l'échantillon prélevé est expulsé, le dispositif selon l'invention comprend un embout prolongeant le conduit dans l'alésage duquel le piston coulisse, de section externe adaptée pour occuper l'orifice, par exemple l'obturer de manière étanche, au jeu fonctionnel près nécessaire pour introduire l'embout dans cet orifice. Cet embout est agencé, d'une part pour être séparé du conduit, par tout moyen approprié, par exemple mécanique et/ou thermique, une fois qu'il occupe l'orifice précité, et d'autre part pour étancher l'orifice, alors que ou une fois que l'embout occupant l'orifice est séparé du conduit.

Préférentiellement, pour étancher l'orifice, le piston relativement dur est agencé pour contraindre ou écraser la paroi relativement molle de l'embout, entre lui-même et la paroi relativement résistante dudit orifice, moyennant quoi ledit embout forme un joint annulaire définitif, et ce alors que ou une fois que ledit embout et ledit piston occupant ledit orifice sont séparés dudit conduit et de la tige de commande respectivement.

De manière particulièrement avantageuse, notamment dans le domaine de la biologie, l'embout est réalisé en un matériau, par exemple une matière plastique, susceptible de fondre sous l'effet de la chaleur. Grâce à ce moyen supplémentaire, et lorsqu'un moyen thermique est utilisé pour séparer le conduit de l'embout, et éventuellement la tige de commande du piston, non seulement la fusion de l'embout contribue à ou permet l'obturation étanche de l'orifice, mais également ce même moyen thermique stérilise ou décontamine, d'un côté l'orifice obturé de manière étanche, et de l'autre côté le reste du dispositif de transfert, c'est-à-dire son extrémité séparée de l'embout et éventuellement du piston, moyennant quoi ce reste ou rebut peut être jeté en condition stérile ou décontaminée.

Grâce à l'invention, l'embout au moins sert non seulement à l'expulsion du liquide prélevé par aspiration, mais également à obturer l'orifice de la paroi, par exemple définitivement, et ceci de manière étanche.

Appliquée par exemple à une carte d'analyse biologique comportant une paroi telle que précédemment définie, séparant une cavité de réception de l'échantillon liquide prélevé et à analyser, de l'extérieur, l'invention permet, après introduction de l'échantillon dans la carte d'analyse, d'isoler définitivement et complètement la carte d'analyse par rapport à l'extérieur, en évitant ainsi notamment toute contamination ultérieure, vers l'intérieur de la carte d'analyse, ou vers l'extérieur de cette dernière. Et cet isolement est obtenu de manière particulièrement simple, sans autre moyen ou outil par exemple, avec seulement le dispositif lui-même.

La présente invention est maintenant décrite par référence au dessin annexé, dans lequel:
- la Figure 1 représente une vue en coupe d'un dispositif de transfert selon l'invention, accouplé en quelque sorte dans l'orifice d'une paroi, au cours de l'expulsion du liquide précédemment prélevé par aspiration;
- la Figure 2 représente ce même dispositif de transfert, après expulsion complète du liquide prélevé, séparation du dispositif en deux parties dont l'une reste dans la paroi précitée, et fusion de l'embout resté dans la paroi, en obturant ou scellant l'orifice de cette dernière, par lequel le liquide prélevé a été transféré.

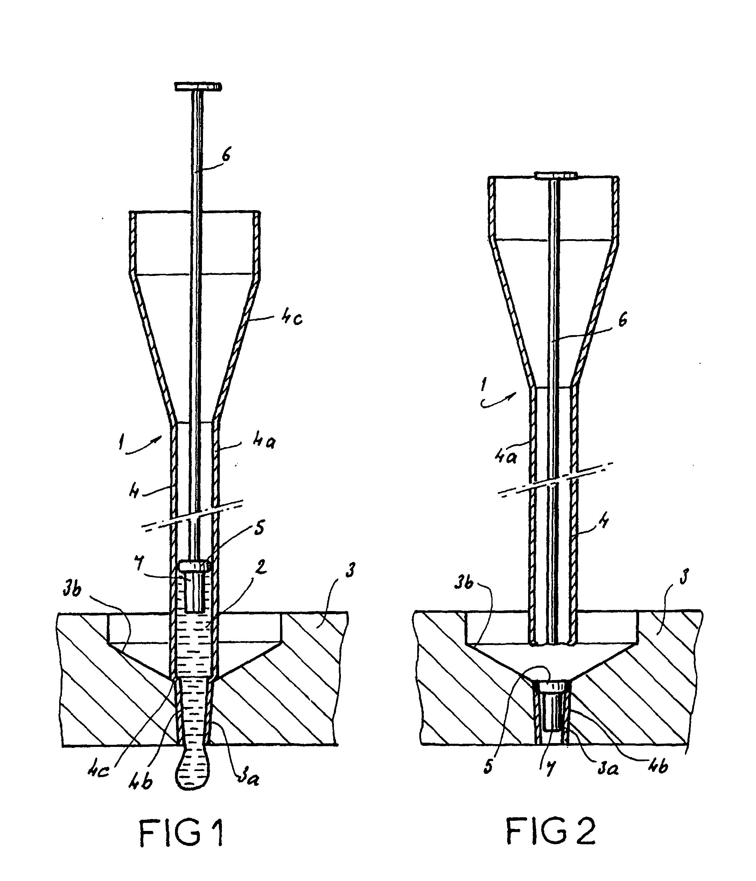

Conformément à la Figure 1, on a représenté de manière schématique ou symbolique une paroi 3 comportant un orifice tronconique 3a, avec un évidement 3b pour la pénétration et le guidage de l'embout du dispositif de transfert. Il s'agit par exemple de la paroi d'une carte d'analyse séparant d'un côté (en haut de la Figure 1) l'extérieur de la carte, par rapport à l'intérieur de la carte (en bas de la Figure 1).

Le dispositif de transfert 1 comprend un tube 4, réalisé de manière monobloc, par exemple par moulage ou extrusion d'une matière plastique, comportant une section distale 4c en forme d'entonnoir, une première section 4a formant un conduit cylindrique, et une deuxième section 4b formant un embout, les sections 4a et 4b étant séparées par un épaulement 4c d'appui contre la paroi 3.

L'embout 4b prolonge par conséquent le conduit 4a, et a une section externe, par exemple tronconique, adaptée pour occuper l'orifice 3a, également de forme tronconique, par exemple l'obturer de manière étanche, bien entendu au jeu fonctionnel près nécessaire pour introduire l'embout 4b dans cet orifice 3a. Cet embout 4b a une longueur telle que son extrémité libre affleure par rapport à la face inférieure de la paroi 3.

Compte tenu de sa matière constitutive, à savoir un matériau thermoplastique fusible relativement mou, par exemple polyéthylène, cet embout 4b se trouve agencé, premièrement pour être séparé du conduit 4a, par tout moyen approprié, par exemple un fil métallique de découpe à haute température; deuxièmement, comme décrit ci-après, l'embout 4b peut être contraint, serré ou écrasé, à la manière d'un joint annulaire d'étanchéité; troisièmement cet embout est susceptible de fondre sous l'effet de la chaleur, pour compléter ou obtenir l'obturation étanche de l'orifice 3a, alors que ou une fois que l'embout 4b occupant l'orifice 3a est séparé du conduit 4a. Bien entendu, séparation et fusion peuvent être obtenues concomitamment, par exemple par passage d'un fil à haute température coupant le tube 4 en deux parties 4a et 4b, et fusionnant la paroi de l'embout 4b, au contact de la paroi de l'orifice 3a, et éventuellement au contact d'un élément interne d'obturation décrit ci-après, en l'occurrence le piston 5.

Un piston 5 est associé au conduit 4a, et coulisse de manière étanche dans ce dernier. De part et d'autre du piston 5 sont disposés, de manière monobloc avec ce dernier, d'une part une tige 6 de commande, et d'autre part un appendice frontal 7, de longueur et section adaptées à une introduction dans l'embout 4b, alors que ce dernier occupe l'orifice 3a; conférer représentation de la Figure 2. Cette pièce monobloc, associant la tige de commande 6, le piston 5 et l'appendice frontal 7, est réalisée dans une matière thermoplastique technique, relativement dure, différente de celle du tube 4, par exemple en polyamide.

Le piston 5 sépare par conséquent la tige 6 de commande et l'appendice frontal 7, et est agencé pour contraindre ou écraser la paroi de l'embout 4b, entre lui-même et la paroi, relativement résistante de l'orifice 3a, bien entendu dans la position où le piston est emmanché dans la partie supérieure de l'embout 4b et l'appendice 7 occupe l'embout 4b, (conférer également Figure 2).

Grâce à la nature thermoplastique, fusible, de la pièce monobloc précitée, l'appendice frontal 7 et le piston 5 peuvent être séparés de la tige de commande 6, alors qu'ils occupent l'embout 4b, en même temps que ce dernier est séparé du conduit 4a, et ceci avec les mêmes moyens que ceux décrits précédemment, par exemple un fil métallique chaud, de découpe.

Dans ces conditions, la totalité de l'embout 4b, du piston 5 et de l'appendice frontal 7 peut être totalement séparée, avec des moyens simples, mécaniques et/ou thermiques, du reste du dispositif. Cette séparation intervient après ou au cours de l'obturation définitive de l'orifice 3a, notamment grâce à la fusion de la matière plastique de l'embout 4b, et éventuellement de l'appendice frontal 7, occupant la section interne de l'embout 4b.

Le mode d'utilisation du dispositif précédemment décrit se déduit de la description précédente:
- dans la position non accouplée avec la paroi 3, et en extrayant la tige de commande 6, par rapport au conduit 4a, on aspire un échantillon liquide 2 par l'embout 4b;
- cet échantillon étant alors contenu dans le tube 4, on accouple ou assemble de manière étanche, le dispositif de transfert 1 dans la paroi 3, et plus précisément, l'embout 4b dans l'orifice 3a;
- dès cet instant, en repoussant la tige de commande 6, on expulse l'échantillon liquide 2, toujours par l'embout 4b;
- une fois l'échantillon liquide expulsé, toujours en repoussant la tige de commande 6, on emmanche le piston 5 dans la partie supérieure de l'embout 4b, ce qui a pour effet d'obturer de manière étanche l'orifice 3a, par compression de l'embout 4b entre le piston 5 et la paroi dudit orifice;
- une fois le piston 5 emmanché, on sépare, avec un moyen tel que décrit précédemment, le dispositif de transfert en deux parties, à savoir une première partie rassemblant l'embout 4b, le piston 5 et l'appendice frontal 7, restant dans l'orifice 3a, et une deuxième partie devenant libre, pouvant être jetée à titre de rebut;
- cette séparation, effectuée préférentiellement avec une source de chaleur, a pour effet de faire fondre l'embout 4b et/ou le piston 5, et/ou l'appendice frontal 7, ce qui crée un bouchon dans l'orifice 3a, définitif une fois solidifié.

## Revendications

1. Dispositif (1) de transfert d'un échantillon liquide (2), prélevé par aspiration, au travers d'une paroi (3) comprenant un orifice (3a), ledit dispositif comprenant un conduit (4a), un piston (5) coulissant de manière étanche dans ledit conduit, et une tige (6) de commande dudit piston, **caractérisé en ce qu'**il comprend un embout (4b) prolongeant le conduit (4a), de section externe adaptée pour occuper ledit orifice (3a), par exemple l'obturer de manière étanche, au jeu fonctionnel près nécessaire pour introduire ledit embout (4b) dans ledit orifice, et cet embout est agencé, d'une part pour être séparé du conduit, une fois qu'il occupe ledit orifice (3a), et d'autre part pour étancher ledit orifice, alors que ou une fois que ledit embout (4b) occupant ledit orifice est séparé dudit conduit.

2. Dispositif selon la revendication 1, **caractérisé en ce que** l'embout est réalisé en un matériau, par exemple une matière plastique, susceptible de fondre sous l'effet de la chaleur.

3. Dispositif selon la revendication 1, **caractérisé en ce que** le conduit (4a) et l'embout (4b) sont réalisés de manière monobloc sous la forme d'un seul et même tube (4), comprenant une première section (4a) formant conduit, et une deuxième section (4b) formant embout.

4. Dispositif selon la revendication 1, **caractérisé en ce que** les deux sections (4a,4b) sont séparées par un épaulement (4c) d'appui contre la paroi (3).

5. Dispositif selon la revendication 1, **caractérisé en ce que** la tige de commande (6) est prolongée par un appendice frontal (7) de longueur et de section adaptées à une introduction dans ledit embout, alors que ce dernier occupe ledit orifice (3a).

6. Dispositif selon la revendication 5, **caractérisé en ce que** ledit appendice frontal (7) est agencé pour être séparé de la tige de commande (6), éventuellement avec le piston (5), alors qu'ils occupent ledit embout, en même temps que ce dernier est séparé du conduit.

7. Dispositif selon la revendication 6, **caractérisé en ce que** la tige de commande (6) et l'appendice frontal (7), et éventuellement le piston (5), sont monobloc, et réalisés en un matériau fusible, par exemple une matière plastique.

8. Dispositif selon les revendications 1 à 5, **caractérisé en ce que** le piston (5) est agencé pour contraindre ou écraser la paroi de l'embout (4b) entre lui-même et la paroi de l'orifice (3a), alors que ou une fois que ledit embout (4b) et ledit piston (5) occupant ledit orifice (3a) sont séparés dudit conduit (4a) et de la tige de commande (6) respectivement.

9. Dispositif selon la revendication 1 à 5, **caractérisé en ce que** le piston (5) sépare la tige de commande (6) et l'appendice frontal (7).

10. Dispositif selon la revendication 1, **caractérisé en ce que** l'embout (4b) a une longueur telle que son extrémité libre affleure par rapport à l'une des faces de la paroi (3).

## Patentansprüche

1. Vorrichtung (1) zum Überbringen einer flüssigen Probe (2), die durch Ansaugen entnommen wurde, durch eine Wand (3), die eine Öffnung (3a) aufweist, wobei diese Vorrichtung eine Rohrleitung (4a), einen Stempel (5), der in dichte Weise in dieser Rohrleitung verschiebbar ist, und eine Steuerstange (6) für diesen Stempel aufweist, **dadurch gekennzeichnet, dass** diese ein Ansatzstück (4b), das die Rohrleitung (4a) verlängert, aufweist, mit einem äußeren Querschnitt, der dazu ausgelegt ist, die Öffnung (3a) zu belegen, beispielsweise um diese dicht zu verschließen, und zwar mit einem solchen engen Arbeitsspiel, das notwendig ist, um dieses Ansatzstück (4b) in diese Öffnung einzuführen, und wobei dieses Ansatzstück so ausgelegt ist, dass es zum einen von der Rohrleitung getrennt werden kann, wenn es einmal die Öffnung (3a) belegt hat, und zum anderen dass es diese Öffnung abdichtet, wenn dieses Ansatzstück (4b) das diese Öffnung belegt, einmal von der Rohrleitung getrennt ist.

2. Vorrichtung nach Anspruch 1, **dadurch gekennzeichnet, dass** das Ansatzstück aus einem Werkstoff, beispielsweise einem Kunststoff, gefertigt ist, der unter Wärmeeinfluss schmilzt.

3. Vorrichtung nach Anspruch 1, **dadurch gekennzeichnet, dass** die Rohrleitung (4a) und das Ansatzstück (4b) einstückig in Form ein und desselben Rohrs (4) gefertigt sind, das einen ersten Abschnitt (4a), der die Rohrleitung bildet, und einem zweiten Abschnitt (4b), der das Ansatzstück bildet, aufweist.

4. Vorrichtung nach Anspruch 1, **dadurch gekennzeichnet, dass** die zwei Abschnitte (4a, 4b) durch eine Schulter (4c) zum Abstützen gegen die Wand (3) getrennt sind.

5. Vorrichtung nach Anspruch 1, **dadurch gekennzeichnet, dass** die Steuerstange (6) durch einen vorderen Fortsatz (7) verlängert ist, der in Länge und Querschnitt zum Einführen in das Ansatzstück angepasst ist, wenn letzteres die Öffnung (3a) belegt.

6. Vorrichtung nach Anspruch 5, **dadurch gekennzeichnet, dass** der vordere Fortsatz (7) so ausgelegt ist, dass er gegebenenfalls mit dem Stempel (5) von der Steuerstange (6) getrennt werden kann, wenn diese das Ansatzstück belegt, und zwar gleichzeitig wenn letzteres von der Rohrleitung getrennt wird.

7. Vorrichtung nach Anspruch 6, **dadurch gekennzeichnet, dass** die Steuerstange (6) und der vordere Fortsatz (7) und gegebenenfalls der Stempel (5) einstückig sind und aus einem schmelzbaren Werkstoff, zum Beispiel einem Kunststoff, hergestellt sind.

8. Vorrichtung nach den Ansprüchen 1 bis 5, **dadurch gekennzeichnet, dass** der Stempel (5) so ausgelegt ist, dass er die Wand des Ansatzstücks (4b) zwischen sich und der Wand der Öffnung (3a) verspannt oder einquetscht, wenn dieses Ansatzstück (4b) und der Stempel (5), die die Öffnung (3a) belegen, von der Rohrleitung (4a) beziehungweise der Steuerstange (6) getrennt sind.

9. Vorrichtung nach den Ansprüchen 1 bis 5, **dadurch gekennzeichnet, dass** der Stempel (5) die Steuerstange (6) und den vorderen Fortsatz (7) voneinander trennt.

10. Vorrichtung nach Anspruch 1, **dadurch gekennzeichnet, dass** das Ansatzstück (4b) so lang ist, dass sein freies Ende im Vergleich mit einer der Flächen der Wand (3) auf gleicher Höhe liegt.

## Claims

1. Device (1) for transferring a liquid sample (2), drawn by suction, through a wall (3) comprising an orifice (3a), said device comprising a conduit (4a), a plunger (5) sealingly sliding in said conduit and a rod (6) controlling said plunger, **characterized in that** it comprises a joining piece (4b) extending the conduit (4a), with outer cross section adapted to fit in said orifice (3a), for example sealing it, with the close working clearance required for inserting said joining piece (4b) in said orifice and this joining piece is arranged on the one hand to be separated from the conduit once it is engaged in said orifice (3a) and, on the other hand, to seal said orifice, when or once said joining piece (4b) engaged in said orifice is separated from said conduit.

2. Device according to Claim 1, **characterized in that** the joining piece is produced from a material, for example a plastics material, capable of melting through the effect of heat.

3. Device according to Claim 1, **characterized in that** the conduit (4a) and the joining piece (4b) are produced in a monobloc manner in the form of one single tube (4), comprising a first section (4a) forming a conduit and a second section (4b) forming a joining piece.

4. Device according to Claim 1, **characterized in that** the two sections (4a, 4b) are separated by a shoulder (4c) bearing against the wall (3).

5. Device according to Claim 1, **characterized in that** the control rod (6) is extended by a front lengthening piece (7) with a length and cross section adapted for insertion in said joining piece, when the latter is engaged in said orifice (3a).

6. Device according to Claim 5, **characterized in that** said front lengthening piece (7) is arranged to be separated from the control rod (6), possibly with the plunger (5), when they engage in said joining piece, at the same time as the latter is separated from the conduit.

7. Device according to Claim 6, **characterized in that** the control rod (6) and the front lengthening piece (7), and possibly the plunger (5), are monobloc and produced from a meltable material, for example a plastics material.

8. Device according to Claims 1 to 5, **characterized in that** the plunger (5) is arranged to constrain or crush the wall of the joining piece (4b) between itself and the wall of the orifice (3a) when or once said joining piece (4b) and said plunger (5) engaged in said orifice (3a) are separated from said conduit (4a) and from the control rod (6), respectively.

9. Device according to Claim [sic] 1 to 5, **characterized in that** the plunger (5) separates the control rod (6) from the front lengthening piece (7).

10. Device according to Claim 1, **characterized in that** the joining piece (4b) has a length such that its free end is flush with one of the faces of the wall (3).
